(19) **Europäisches Patentamt**
**European Patent Office**
**Office européen des brevets**

(11) **EP 2 237 511 A1**

(12) **EUROPEAN PATENT APPLICATION**
published in accordance with Art. 153(4) EPC

(43) Date of publication:
06.10.2010 Bulletin 2010/40

(21) Application number: 07855886.3

(22) Date of filing: 28.12.2007

(51) Int Cl.:
*H04L 25/03* (2006.01)  *H04B 7/26* (2006.01)
*H04L 29/02* (2006.01)  *H04B 1/02* (2006.01)
*H04B 1/06* (2006.01)

(86) International application number:
PCT/CN2007/003885

(87) International publication number:
WO 2009/082853 (09.07.2009 Gazette 2009/28)

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: ZTE Corporation
Shenzhen, Guangdong 518057 (CN)

(72) Inventors:
• SUN, Yunfeng
Guangdong 518057 (CN)

• DUAN, Yajun
Guangdong 518057 (CN)
• LI, Feng
Guangdong 518057 (CN)

(74) Representative: Wihlsson, Joakim Per Magnus et al
Bjerkéns Patentbyra KB
Östermalmsgatan 58
114 50 Stockholm (SE)

(54) **SELF-ADAPTIVE CODEBOOK PROCESSING METHOD**

(57) An adaptive codebook processing method comprises: step S102, initializing the local codebook set by using the initial codebook set; and step S104, updating the initialized local codebook set by using the feedback codebook set.

Fig.1

## Description

## TECHNICAL FIELD

The present invention relates to the field of communications, and especially to an adaptive codebook processing method.

## BACKGROUND

The precoding technique means processing the transmitting data using a precoded matrix according to the channel information fed back by a receiver, so that individual data streams can be equivalent to be transmitted in spatial mutually-independent channels when transmitting on spatial channels. However, the premise of the precoding technique is that the transmitter can obtain such channel information.

In an actual design, it is necessary to restrict the overhead during the feedback of channel information. Therefore, codebook was introduced in the existing techniques, with major processing procedures: quantifying the possible situation of channels, using the current channel to match a closest codebook, and feeding back the index of the codebook.

However, a much heavy feedback overhead is required even when the codebook only includes the most basic channel states. For example, assuming that the channel parameters of each antenna are only quantified into 4 types of values; if individual channels are independent and streams are independent to each other, and assuming that the number of transmitting antennas is m and the number of data streams is k, then there will be $(4)^{m*k}$ codebooks. That is to say, there will be 256 codebooks under the condition of 4-antenna single-stream calculation. Thus, even with such imprecise quantification of only quantifying one channel into 4 types of values, the number of codebooks generated is still huge.

Therefore, the restriction of channel feedback overhead and the requirement for the accuracy of channel feedback information form a contradiction. Currently, the study on precoding mainly includes: (1) how to improve the accuracy of the feedback codebook under the condition of limited overhead; (2) how to reduce the number of codebooks under the condition of ensuring the accuracy of designed codebooks. These two issues are in nature both intended to solve the contradiction between the feedback overhead and accuracy requirement.

In the existing techniques, a certain number of codebooks are usually fixed, and such fixed codebooks are used to match components of channels. In this way, on the one hand, the number of codebooks is limited due to the restriction of feedback overhead; while on the other hand, the channel will have many components because of its random characteristics, so it is very hard to use a finite number of codebooks to match an infinite number of channel components, plus the instant components can not reflect the statistics characteristics of channels and can not achieve the expected effect.

It is not difficult to find out that the codebook design methods used nowadays can not guarantee the accuracy of feedback codebooks under the condition of restricting the overhead. However, no technical solutions that can solve the problem have been proposed nowadays.

## SUMMARY

The present invention has been initiated to tackle the above said issue; therefore, the main purpose of the present invention is to provide an adaptive codebook processing scheme, so as to utilize a limited number of codebooks to reflect the statistics characteristics of channels as accurately as possible.

Based on the embodiments of the present invention, an adaptive codebook processing method is provided.

The method comprises: step S102, initializing a local codebook set by using an initial codebook set; and step S104, updating the initialized local codebook set by using a feedback codebook set.

In step S102, a transmitter and a receiver initialize their own stored local codebook sets by using the initial codebook set respectively; wherein, the number of codebooks in the initial codebook set is identical to the number of codebooks in the local codebook set stored individually by either the transmitter or the receiver.

Or, in step S102, the receiver, at the first time of feeding back the codebook set to the transmitter, matches the initial codebook set based on channels and sends the matched initial codebook set information to the transmitter; the transmitter initializes its local codebook set by using the matched initial codebook set; wherein, the number of codebooks in the initial codebook set is identical to the number of codebooks in the feedback codebook set.

Moreover, prior to the step S104, the method further comprises: step A, in which the receiver performs channel estimation to obtain the channel information; step B, in which according to the channel information and maybe also the local codebook set stored by the receiver, the receiver matches channel by each of the codebook in feedback codebook set, and finds the codebooks in the feedback codebook set that best matching to the local codebooks in local codebook set and the channels according to predefined rules; step C, in which the receiver feeds back the information of the best-matching codebook to the transmitter.

And, when the system has multiple feedback codebook sets or initial codebook sets, the transmitter can notify the receiver of which codebook set currently used.

In the step S104, the method further comprises: step D, in which the transmitter updates the codebooks in local codebook set which reflect the long-term channel characteristics using the feedback codebooks which best match current channels and reflect the instant characteristics of the current channels; step E, in which the transmitter obtains the precoding weight using the updated codebooks and uses the obtained precoding weight to precode the data that will be sent during the next time slot.

After the step E, the method can also further comprise: after feeding back the best-matching codebooks to the transmitter, the receiver simultaneously updates the local codebooks by using the best-matching codebooks; the transmitter sends the precoded data to the receiver, and the receiver performs data detection using the weight that corresponds to the current data in the updated local codebook set.

Wherein, the best-matching codebook is the following codebook in the feedback codebook set: the codebook that best satisfies the predefined rule among all codebooks obtained via matching based on the channel information. And, such predefined rules may include: the minimum inter-stream interference principle, maximum likelihood criteria or optimal detection performance criteria.

After the step S104, the updated local codebooks are updated by using the feedback codebook set.

In the step S102, the local codebook set is initialized periodically or initialized aperiodically.

The above mentioned technical scheme of the present invention can be used to effectively improve the adaptability of codebook to better adapt to channel characteristics; moreover, it can expand the actual number of codebooks to mitigate the defect that the number of codebooks is limited in existing codebook design methods; in addition, it can also significantly improve the performance of the precoding system, and simple for implementation without requiring extra signaling overhead.

**BRIEF DESCRIPTION OF THE DRAWINGS**

The drawings described here are used to provide further understanding of the present invention and constitute a part of the present invention, the illustrative embodiments of the present invention and their explanations are used to interpret the present invention and do not constitute any improper restriction on the present invention. Among the drawings:

Fig.1 is a flowchart of the adaptive codebook processing method based on the embodiments of the present invention;
Fig.2 is a processing schematic diagram illustrating the adaptive codebook processing method based on the embodiments of the present invention;
Fig.3a is a UE-side processing flowchart of the adaptive codebook processing method based on the embodiments of the present invention;
Fig.3b is a base-station-side processing flowchart of the adaptive codebook processing method based on the embodiments of the present invention; and
Fig.4 is a schematic diagram illustrating the performance comparison between the codebook design method based on DFT and the adaptive codebook design method based on the present invention.

**DETAILED DESCRIPTION**

Since channels follow certain statistical distribution characteristics, it is not impossible to predict the regularity of channels. Therefore, if the codebooks can be made to track the variation characteristics of channels adaptively, then the accuracy of precoded vectors can be improved significantly,

In view of this, an adaptive codebook processing method is provided in this embodiment.

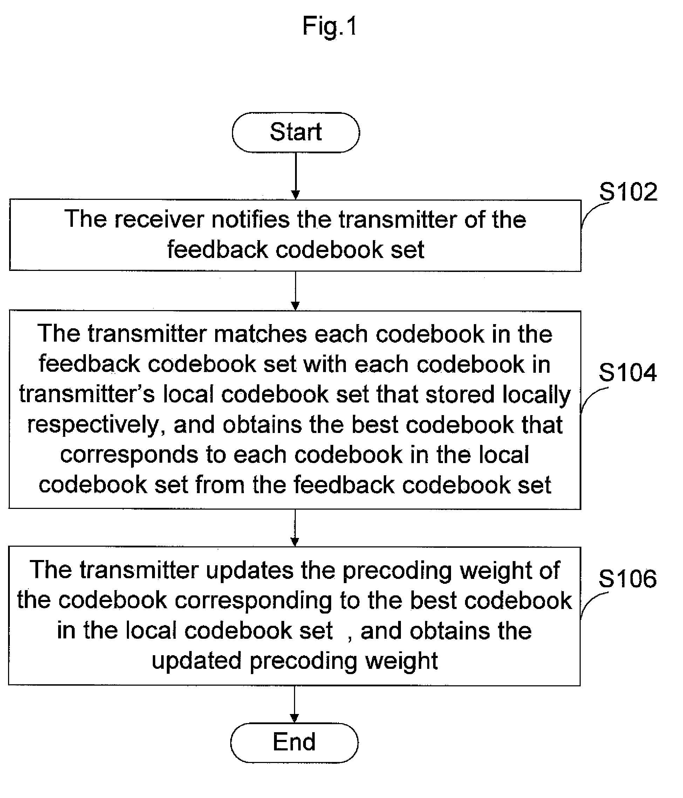

As shown in Fig.1, the adaptive codebook processing method based on this embodiment comprises: step S102, initializing the local codebook set by using the initial codebook set; and step S104, updating the initialized local codebook set by using the feedback codebook set.

In the step S102, a transmitter (can be a UE) and a receiver (can be a UE) initialize their own stored local codebook sets using the initial codebook set respectively; wherein, the number of codebooks in the initial codebook set is identical to the number of codebooks in the local codebook set stored individually by either the transmitter or the receiver.

Or, in step S102, the receiver, at the first time of feeding back the codebook set to the transmitter, matches the initial codebook set based on channels and sends the matched initial codebook set information to the transmitter; the transmitter initializes its local codebook set by using the matched initial codebook set; wherein, the number of codebooks in the initial codebook set is identical to the number of codebooks in the feedback codebook set.

Moreover, prior to the step S104, the method further comprises: step A, in which the receiver carries out channel estimation to obtain the channel information; step B, in which according to the channel information and maybe also the local codebook set stored by the receiver, the receiver matches channel by each of the codebook in feedback codebook set, and finds the codebooks in the feedback codebook set that best matching to the local codebooks in local codebook set and the channels according to predefined rules; step C, in which the receiver feeds back the information of the best-matching codebook to the transmitter.

And, when the system has multiple feedback codebook sets or initial codebook sets, the transmitter can notify the receiver of which codebook set currently used.

In step S104, further comprise: step D, in which the transmitter updates the codebooks in local codebook set which reflect the long-term channel characteristics using the feedback codebooks which best match current channels and reflect the instant characteristics of current channels; step E, in which the transmitter obtains the precoding weight based on the updated codebooks and uses the obtained precoding weight to precode the data that will be sent during the next time slot

After the step E, the method can also further comprise: after feeding back the best-matching codebooks (i.e. the codebooks that match channels best) to the transmitter, the receiver simultaneously updates the local codebook using the best-matching codebooks, where the updating method is the same as that for the transmitter; the transmitter sends the precoded data to the receiver, and the receiver performs data detection using the weight that corresponds to the current data in the updated local codebook set.

Wherein, the best-matching codebook is the following codebook in the feedback codebook set: the codebook that best satisfies the predefined rule among all codebooks obtained via matching based on the channel information. And, such predefined rules may include: the minimum inter-stream interference principle, maximum likelihood criterion or optimal detection performance criterion.

After the step S104, the updated local codebook set is updated by using the feedback codebook set.

Moreover, in the step S102, the local codebook set is initialized periodically or initialized aperiodically.

Specifically, in the step S102, using the initial codebook to initialize the local codebook set A refers to that: the initial codebook S is used to initialize the local codebook set of each UE, and different UEs (User Equipments) perform the initializing separately. After initialization, each UE corresponds to a set of local codebook set that belongs to itself. The number of codebooks in A can be set based on the frequency domain quantified granularity, and can also be set based on other policies. The frequency domain quantified granularity refers to the quantified granularity of the codebook fed back on the frequency axis (such as m resource blocks). The initial codebook set S can be transparent to the base station and the UE, and can also be broadcasted to the UE by the base station during initial access (at which time the UE can save multiple feedback codebook sets, and the base station notifies UE of which feedback codebook set to be use), and the initialization process takes place between the receiver and the transmitter.

The method of initialization using the S can be that both the receiver and the transmitter initialize directly using the S, at which time the number of elements in the S is identical to the number of codebooks in the local codebook set A. It can also be that at the first feedback, the receiver performs the matching through the weight in the S and then feeds back the matched weight in the S to the transmitter, at which time the number of elements in the S is identical to the number of the feedback codebooks B.

Specifically, in the step S104, updating the local codebook set based on the feedback codebook comprises:

(1) matching of codebooks: each UE performs matching according to a certain rule using each weight in the feedback codebook set B based on the current channel information, and maybe also simultaneously in combination with the local set A. The best-matching codebook $B_j$ is obtained from the feedback codebook set. The predefined matching rule can be the minimum inter-stream interference principle, maximum likelihood criterion or optimal detection performance criterion;

(2) feeding back codebook information: the receiver feed back the information of the best-matching codebook to the transmitter; and

(3) updating of the local codebook set: both the receiver and the transmitter update the elements corresponding to the local codebook set A based on the feedback information of the best-matching codebook.

It should be noted that the transmitter does not directly obtain the precoding weight using the best-matching codebook in the feedback codebook set, instead it updates the codebooks that reflect the long-term channel characteristics in the local codebook set using the fed back codebook information that reflects the instant characteristics of the channels, and obtains the precoding weight using the updated value, then precodes the data that will be sent during the next time slot.

In addition, preferably, in order to avoid the invalidation of the local codebook set A caused due to channel mutation, it is practical to reinitialize the local codebook set periodically or aperiodically (such as event triggering) using the initial codebook set through the method of direct initialization or through the receiver feedback initialization method.

It is not difficult to find out that the precoding codebook design should simultaneously reflect both long-term statistics characteristics and instant characteristics of channels based on the embodiments of the present invention.

During actual implementations, after the receiver feeds back the codebook that reflects the instant channel characteristics, the transmitter can update the locally stored codebooks based on the fed back codebook with the instant channel characteristics through the function $F(A_i, B_j)$. Wherein, the $A_i$ is the i-th local precoding weight since the last update (namely, the codebook in the above mentioned local codebook set), the $B_j$ is the instant codebook that corresponds to the $A_i$ in the codebooks fed back by the receiver (namely, the best-matching codebook in the above mentioned feedback codebook set). Updating the $A_i$ continuously using the function $F(A_i, B_j)$ will make the $A_i$ not only reflect channels' long-term statistics characteristics but also contain instant channel information. The $B_j$ is the best codebook that is obtained via matching in the codebook set B by the receiver based on the $A_i$ and channel H. Wherein, the number of codebook sets B (the feedback codebook set) can satisfy the

following relationship: m=log$_2$N; wherein: the m is the number of feedback overhead bits, and the N is the number of the codebooks in the B for 2-level hierarchical codebook structure. The number of the local codebook set A can be established based on the transmitter's strategy.

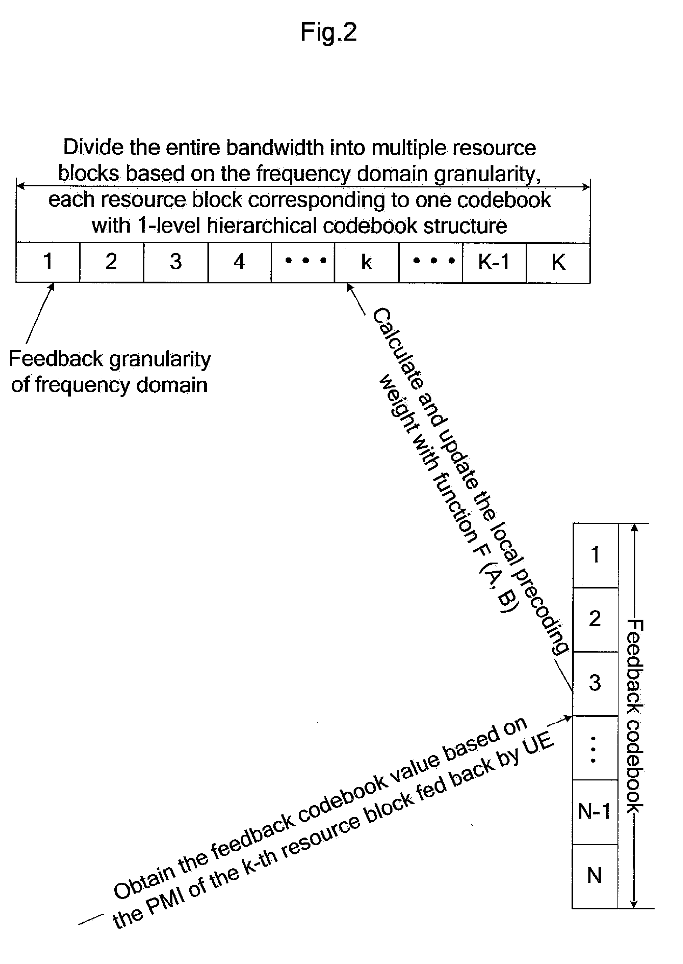

As shown in Fig.2, in the above mentioned processing, the precoding weight vector A and the codebook B reflect channels' long-term statistics characteristics and instant variation characteristics, respectively, and can better adapt to channels' quick change characteristics than the existing codebook design schemes. On the other hand, although the numbers of the local precoding weights in the A and the codebooks in the B are finite, the number of possible values of the A can still be infinite as the codebooks A are doing adaptive updating continuously based on the B. The actual number of codebooks can also be expanded greatly, thereby mitigating the defect that the number of codebooks is finite in the existing codebook design methods. The performance of the precoding system can be improved greatly as long as the feedback codebook B and the update function F (A, B) are designed. Moreover, in terms of controlling the signaling overhead, the above mentioned design method does not require any additional control signaling overhead; while in term of complexity, it is only necessary to add the computation of the update function.

In a system that comprises user equipment and base stations, the processing in the present invention is as below:

Firstly, the codebooks are initialized: After accessing the system, the user equipment (UE) will first initialize the feedback codebook based on the system bandwidth, the feedback granularity, and the feedback overhead restriction. The relationship between the number of the feedback codebooks and the feedback overhead restriction should satisfy the following equation m = log$_2$N; wherein, the m is the feedback overhead, and the N is the number of the feedback codebooks, and the value of the N should also consider the issue of codebook matching complexity. The method for initializing the local codebook set can be determined based on the specific strategy. In an evaluation scenario, for example, the method is designed based on the number of the resource blocks, and each of the local precoding weight corresponds to one resource block, and the codebook is initialized by the initial codebook set after access; or the receiver initializes the local codebook set, the transmitter's local codebook set is the initialized local codebook set matched and fed back by the receiver based on the receiver's matching result during the first access, namely, the receiver periodically or aperiodically uses the initial codebooks during the first feedback, and uses the feedback codebooks during other time slots.

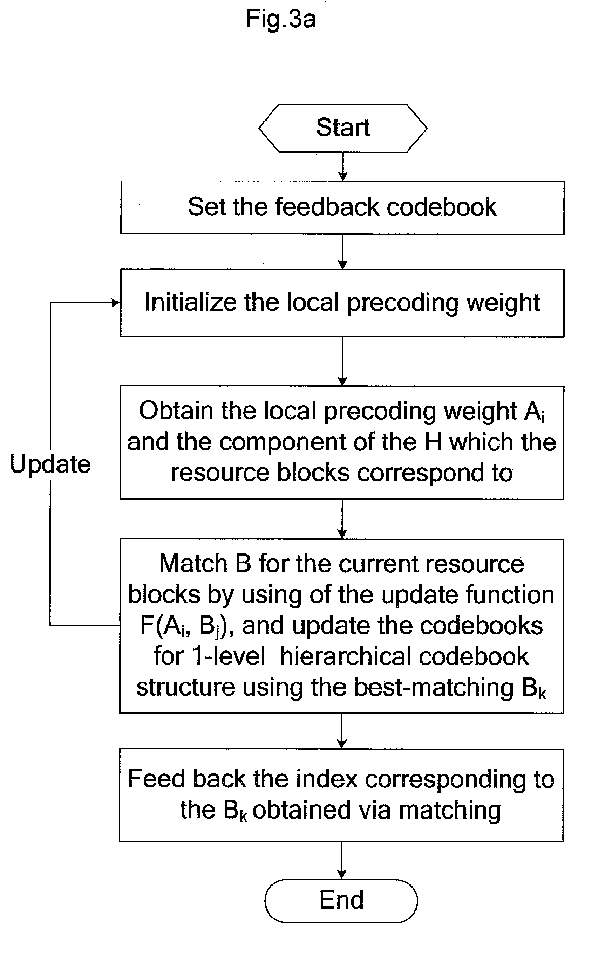

As shown in Fig.3a, then, the specific processing steps performed at the UE side are as below:

(1) the UE performs channel estimation, decomposes the H in each resource block (such as SVD decomposition) based on the granularity requirements in the codebook design, according to the decomposition parameters and the local precoding weight saved at the UE side which updated previously, the UE matches the H using different feedback codebooks B$_k$ (k=1, ...N) based on the function F (A$_i$, B$_j$) and certain principle (such as the minimum inter-stream interference principle), to obtain the best-matching feedback codebook that corresponds to current resource block, which is assumed as B$_j$ (j ∈ (1... N)) (namely, the feedback codebook);
(2) the corresponding local weight A$_i$ is updated using each matched feedback codebook B$_j$ respectively based on the codebook-update function F(A, B);
(3) the information of the best-matching feedback codebook is obtained; and
(4) feed back to the base station.

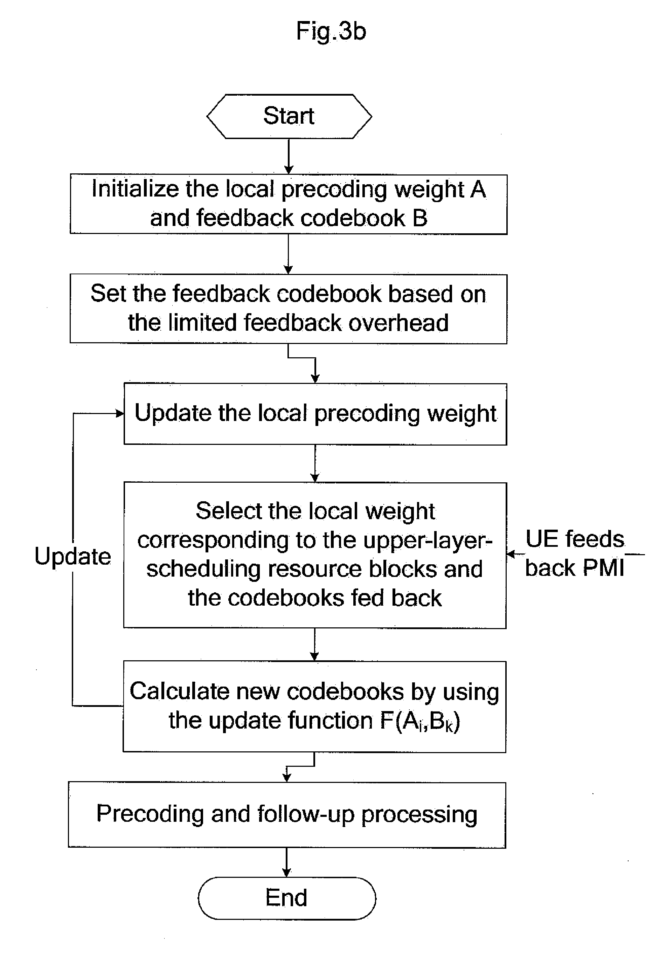

As shown in Fig.3b, after the UE fed back codebook B, the specific processing steps performed at the base station side are as below:

(1) the base station side receives the codebook information fed back by the UE;
(2) the parameters of the corresponding codebook is obtained;
(4) the current precoding weight A$_i$ and the best-matching B$_j$ in the feedback codebook set that has been fed back are obtained, and the precoding weight A$_i$ of the current TTI is calculated based on the update function F (A$_i$, B$_j$). And the precoding weight A$_i$ is updated using $A_i'$; and

(5) the obtained new weight $A_i'$ is used to calculate the precoding weight, and the data that is to be sent during the next time slot is precoded by $A_i'$.

The subsequent steps are the same as those in the existing systems, and they can be processed in reference to the existing systems. They are not repeated here one by one.

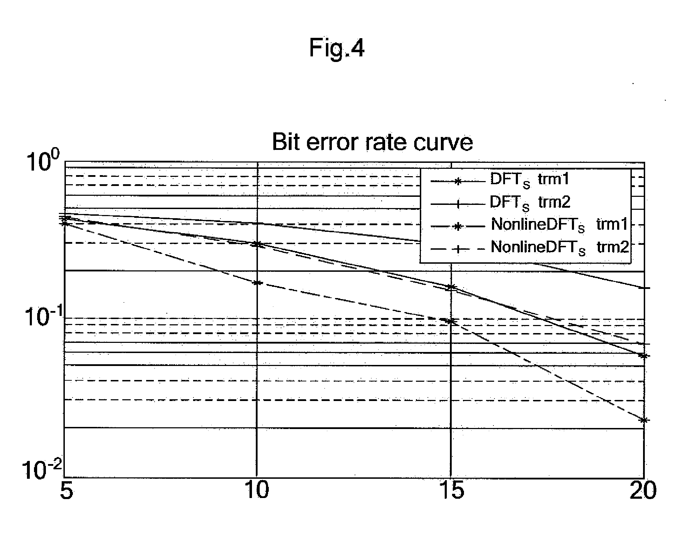

Fig.4 shows the performance comparison between the codebook design method based on DFT and the adaptive codebook design method in the present invention. It is not difficult to find out that the present invention can more accurately reflect the channel characteristics and significantly reduce the bit error rate.

In summary of the above, the technical scheme of the present invention can be used to effectively improve the adaptability of codebooks to better adapt to channel characteristics; moreover, it can expand the actual number of codebooks to mitigate the defect that the number of the codebooks is limited in existing codebook design methods; in addition, it can also significantly improve the performance of the precoding system, thereby offering the simplicity without requiring extra signaling overhead.

The present invention is not limited to the above described exemplary embodiments. For those skilled in the art, various modifications and changes can be made to the present invention. Any modification, equivalent substitute and improvement within the spirit of the present invention are deemed to be included within the scope of the present invention, as defined by the claims.

**Claims**

1. An adaptive codebook processing method, comprising:

   step S102, using an initial codebook to initialize a local codebook set; and
   step S104, using a feedback codebook set to update said initialized local codebook set.

2. A method according to claim 1, wherein, in said step S102, a transmitter and a receiver initialize their own stored local codebook sets by using said initial codebook set respectively; wherein, the number of codebooks in said initial codebook set is identical to the number of codebooks in said local codebook set stored individually by either said transmitter or said receiver.

3. A method according to claim 1, wherein, in said step S102, when feeding back said feedback codebook set to the transmitter for the first time, the receiver matches said initial codebook set based on channels and sends said matched initial codebook set information to said transmitter; said transmitter initializes its local codebook set by using said matched initial codebook set; wherein, the number of codebooks in said initial codebook set is identical to the number of codebooks in said feedback codebook set.

4. A method according to claim 1, wherein, prior to said step S104; the method further including:

   step A, the receiver performing channel estimation and obtaining the channel information;
   step B, according to the channel information and the local codebook set stored by the receiver, the receiver matching channel by each of the codebook in feedback codebook set, and finding the codebooks in the feedback codebook set that best matching to the local codebooks in local codebook set and the channels according to predefined rules; and
step C, in which said receiver feeding back the information of said best-matching codebook to said transmitter.

5. A method according to claim 4, wherein, when the system has multiple feedback codebook sets or initial codebook sets, the transmitter notifies the receiver of which codebook set currently used.

6. A method according to claim 4, wherein, in said step S104, further including:

   step D, in which said transmitter updates the codebooks in said local codebook set which reflect the long-term channel characteristics using said feedback codebooks which best match current channels and reflect instant characteristics of the current channels; and
   step E, in which said transmitter obtains the precoding weight based on the updated codebooks, and uses said obtained precoding weight to precode the data to be sent during the next time slot.

7. A method according to claim 6, wherein, after said step E, further comprising:

   after feeding back said best-matching codebooks to the transmitter, said receiver simultaneously uses said best-matching codebooks to update the local codebooks;
   the said transmitter sends said precoded data to said receiver, and said receiver performs data detection using the weight that corresponds to the current data in the updated local codebook set.

8. A method according to any of claims 4 to 7, wherein, said best-matching codebook is the following codebook in said feedback codebook set: the codebook that best satisfies said predefined rule in the codebooks obtained via matching based on said channel information.

9. A method according to any of claims 4 to 7, wherein, said predefined rules include: the minimum inter-stream interference principle, maximum likelihood criterion or optimal detection performance criterion.

10. A method according to any of claims 1 to 7, wherein, after said step S104, said updated local codebooks are updated by using said feedback codebook set.

11. A method according to any of claims 1 to 7, wherein, in said step S102, the initialization performed on said local codebook set is a periodical initialization or aperiodic initialization.

## Fig.1

Start

The receiver notifies the transmitter of the feedback codebook set — S102

The transmitter matches each codebook in the feedback codebook set with each codebook in transmitter's local codebook set that stored locally respectively, and obtains the best codebook that corresponds to each codebook in the local codebook set from the feedback codebook set — S104

The transmitter updates the precoding weight of the codebook corresponding to the best codebook in the local codebook set , and obtains the updated precoding weight — S106

End

## Fig.2

Divide the entire bandwidth into multiple resource
blocks based on the frequency domain granularity,
each resource block corresponding to one codebook
with 1-level hierarchical codebook structure

| 1 | 2 | 3 | 4 | • • • | k | • • • | K-1 | K |
|---|---|---|---|---|---|---|---|---|

Feedback granularity
of frequency domain

Calculate and update the local precoding
weight with function F (A, B)

Obtain the feedback codebook value based on
the PMI of the k-th resource block fed back by UE

| 1 |
|---|
| 2 |
| 3 |
| ⋮ |
| N-1 |
| N |

Feedback codebook

## Fig.3a

```
┌────────────────┐
│     Start      │
└────────────────┘
        │
        ▼
┌──────────────────────────────────────┐
│        Set the feedback codebook      │
└──────────────────────────────────────┘
        │
        ▼
┌──────────────────────────────────────┐
│     Initialize the local precoding    │
│             weight                     │
└──────────────────────────────────────┘
        │
        ▼
┌──────────────────────────────────────┐
│   Obtain the local precoding weight $A_i$ │
│   and the component of the H which the │
│       resource blocks correspond to    │
└──────────────────────────────────────┘
        │
        ▼
┌──────────────────────────────────────┐
│     Match B for the current resource   │
│   blocks by using of the update function │
│   $F(A_i, B_j)$, and update the codebooks │
│       for 1-level  hierarchical codebook │
│   structure using the best-matching $B_k$ │
└──────────────────────────────────────┘
        │
        ▼
┌──────────────────────────────────────┐
│   Feed back the index corresponding to │
│     the $B_k$ obtained via matching    │
└──────────────────────────────────────┘
        │
        ▼
┌────────────────┐
│      End       │
└────────────────┘
```

Update

## Fig.3b

Start

Initialize the local precoding weight A
and feedback codebook B

Set the feedback codebook based on
the limited feedback overhead

Update the local precoding weight

Select the local weight
corresponding to the upper-layer-
scheduling resource blocks and
the codebooks fed back

UE feeds
back PMI

Update

Calculate new codebooks by using
the update function $F(A_i, B_k)$

Precoding and follow-up processing

End

Fig.4

Bit error rate curve

Legend:
- DFT$_S$ trm1
- DFT$_S$ trm2
- NonlineDFT$_S$ trm1
- NonlineDFT$_S$ trm2

| INTERNATIONAL SEARCH REPORT | International application No. |
|---|---|
| | PCT/CN2007/003885 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)

H04L, H04B, H04Q

Documentation searched other than minimum documentation to the extent that such documents are included in the fields searched

Electronic data base consulted during the international search (name of data base and, where practicable, search terms used)

WPI,EPODOC,PAJ,CNPAT: codebook, feedback

**C. DOCUMENTS CONSIDERED TO BE RELEVANT**

| Category* | Citation of document, with indication, where appropriate, of the relevant passages | Relevant to claim No. |
|---|---|---|
| X | US2007/0265037A1(INTERDIGITAL TECHNOLOGY CORP) 15 Nov. 2007(15.11.2007) para. 0021-0030, fig 3 | 1-11 |
| X | WO2006/117665A1(NORTEL NETWORKS LTD) 9 Nov. 2006(09.11.2006) | 1-5,8-11 |
| Y | para. 0024-0037, figs 2-6 | 6,7 |
| Y | WO2007/105928A1(SAMSUNG ELECTRONICS CO LTD) 20 Sep. 2007(20.09.2007) page 11 line 4-page 12 line 4, fig 4 | 6,7 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 Aug. 2008 (22.08.2008) | **04 Sep. 2008 (04.09.2008)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer FAN,Chengbo Telephone No. (86-10)62413361 |

Form PCT/ISA/210 (second sheet) (April 2007)

## INTERNATIONAL SEARCH REPORT

International application No.

PCT/CN2007/003885

C (Continuation).    DOCUMENTS CONSIDERED TO BE RELEVANT

| Category* | Citation of document, with indication, where appropriate, of the relevant passages | Relevant to claim No. |
|---|---|---|
| X | EP1838024A1 (SIEMENS AG)26 Sep. 2007(26.09.2007) the whole document | 1-5,8-11 |
| Y | | 6,7 |
| X | WO2007/066936A2(UNIV IND ACADEMIC COOP FOUND) 14 Jun. 2007(14.06.2007) | 1-5,8-11 |
| Y | para. 56-71, fig 3 | 6,7 |
| X | CN101039137A (UNIV SHANGHAI JIAOTONG) 19 Sep. 2007(19.09.2007) | 1-5,8-11 |
| Y | pages 8,16,17 | 6,7 |
| E | CN101146078A (ZTZ COMMUNICATION CO LTD) 19 Mar. 2008(19.03.2008) claims 1,2,7 | 1,2,4,8-10 |
| A | US2006/0268623A1(SAMSUNG ELECTRONICS CO LTD) 30 Nov. 2006(30.11.2006) the whole document | 1-11 |

Form PCT/ISA/210 (continuation of second sheet ) (April 2007)

## INTERNATIONAL SEARCH REPORT
Information on patent family members

International application No.

PCT/CN2007/003885

| Patent Documents referred in the Report | Publication Date | Patent Family | Publication Date |
|---|---|---|---|
| US2007/0265037A1 | 15.11.2007 | WO2007133564A2 | 22.11.2007 |
| WO2006/117665A1 | 09.11.2006 | NONE | |
| WO2007/105928A1 | 20.09.2007 | KR20070094442A | 20.09.2007 |
| EP1838024A1 | 26.09.2007 | NONE | |
| WO2007/066936A2 | 14.06.2007 | NONE | |
| CN101039137A | 19.09.2007 | NONE | |
| CN101146078A | 19.03.2008 | NONE | |
| US2006/0268623A1 | 30.11.2006 | KR20060097519A | 14.09.2006 |
| | | KR100659539B1 | 20.12.2006 |

Form PCT/ISA/210 (patent family annex) (April 2007)

## INTERNATIONAL SEARCH REPORT

| International application No. |
| --- |
| PCT/CN2007/003885 |

Continuation of : CLASSIFICATION OF SUBJECT MATTER

H04L25/03(2006.01)i
H04B7/26(2006.01)i
H04L29/02 (2006.01)i
H04B1/02(2006.01)n
H04B1/06(2006.01)n
H04Q7/20(2006.01)n

Form PCT/ISA/210 (extra sheet) (April 2007)